# EUROPÄISCHE PATENTSCHRIFT

(11) **EP 2 507 038 B1**
(45) Veröffentlichungstag und Bekanntmachung des Hinweises auf die Patenterteilung: **12.02.2014**
(21) Anmeldenummer: 10781516.9
(22) Anmeldetag: 24.11.2010
(51) Int. Cl.: B29C 70/22, B29C 70/54

(54) **VERFAHREN ZUM BILDEN EINES STRUKTURBAUTEILS EINES LUFT- ODER RAUMFAHRZEUGES, UMFORMVORRICHTUNG UND DAMIT HERGESTELLTES STRUKTURBAUTEIL**
METHOD FOR FORMING A STRUCTURAL COMPONENT OF AN AIRCRAFT OR SPACECRAFT, FORMING DEVICE AND STRUCTURAL COMPONENT OBTAINED THEREBY
PROCÉDÉ POUR FORMER UN COMPOSANT DE STRUCTURE D'UN AÉRONEF OU D'UN VÉHICULE SPATIAL, DISPOSITIF DE DÉFORMATION ET COMPOSANT DE STRUCTURE AINSI OBTENU

(30) Priorität: 01.12.2009 DE 102009047340; 01.12.2009 US 265478 P
(43) Veröffentlichungstag der Anmeldung: 10.10.2012
(73) Patentinhaber: Airbus Operations GmbH, 21129 Hamburg (DE)
(72) Erfinder: BERESINSKI, Marek, 21149 Hamburg (DE)
(74) Vertreter: Isarpatent
(86) Internationale Anmeldenummer: PCT/EP2010/068138
(87) Internationale Veröffentlichungsnummer: WO 2011/067146

(56) Entgegenhaltungen:
- DE-A1- 10 326 422
- DE-C1- 19 915 083

## Beschreibung

Die vorliegende Erfindung bezieht sich auf ein Verfahren zum Bilden eines Strukturbauteils eines Luft- oder Raumfahrzeuges eine Umformvorrichtung und auf ein damit hergestelltes Strukturbauteil.

Obwohl auf Strukturbauteile mit beliebigen Faserwerkstoffen anwendbar, wird die vorliegende Erfindung sowie die ihr zugrunde liegende Problematik nachfolgend mit Bezug auf Profilbauteile aus Kohlefaserkunststoff (CFK)-Bauteile, beispielsweise Spantprofile eines Flugzeugs, näher erläutert.

Es ist allgemein bekannt, andere CFK-Bauteile, wie beispielsweise Hautschalen mit CFK-Stringern und CFK-Spanten zu versteifen, um den hohen Belastungen im Flugzeugbereich bei möglichst geringem zusätzlichem Gewicht standzuhalten. Dabei werden unterschiedliche Profiltypen verwendet, zum Beispiel C, Ω-, Z-Profile und dergleichen.

Im Folgenden sollen geflochtene Profile behandelt werden. Die heutige Flechtentechnologie ermöglicht die Fertigung von Geflechten, welche durch geschlossene Querschnitte charakterisiert werden. Dabei wird zum Beispiel ein Kern, z.B. mit rechteckigem Profil, mit Fasern umflochten, wobei Geflechtlagen entstehen. Zwischen diesen Geflechtlagen werden dann in Gurtbereichen Gurtlagen, z.B. unidirektionale Fasergelege, in Längsrichtung des Kerns abgelegt. Es wird somit ein geflochtenes Hohlprofil, z.B. ein Rechteckrohr mit einem geschlossenen Querschnitt erzeugt. Zur Herstellung von so genannten C-Profilen wird dieses Rechteckprofil dann in einer Ebene in seiner Längsachse so geteilt, dass zwei C-Profile entstehen.

Somit ermöglicht die heutige Flechttechnik die Fertigung auch von gekrümmten C-Preforms. Unter dem Begriff Preform ist ein so genannter Vorformling bzw. textiler Faservorformling zu verstehen, der nachträglich mit einer Matrix getränkt und dann zum Beispiel in einem Autoklaven ausgehärtet wird.

Der Prozess des Flechtens lässt sich im großen Umfang automatisieren, und durch die Anwendung der CNC-Technik können Profile mit nicht konstantem Querschnitt erzeugt werden. Da aber in der Rumpfkonstruktion von Flugzeugen und Raumfahrzeugen auch Spanten mit einem so genannten Z-Profil immer häufiger Anwendung finden, besteht ein Bedarf, diese auch automatisiert herzustellen. Dies ist aber bisher mit der Flechttechnik nicht möglich, da nur geschlossene Querschnitte umflochten werden können.

Vor diesem Hintergrund liegt der vorliegenden Erfindung die Aufgabe zugrunde, ein verbessertes Verfahren zum Bilden eines Strukturbauteils eines Luft- oder Raumfahrzeuges anzugeben. Eine weitere Aufgabe besteht darin, eine entsprechende Umformvorrichtung bereitzustellen.

Erfindungsgemäß wird diese Aufgabe durch ein Verfahren mit den Merkmalen des Patentanspruchs 1 bzw. durch eine Umformvorrichtung mit den Merkmalen des Patentanspruchs 8 bzw. durch ein Strukturbauteil mit den Merkmalen des Patentanspruchs 15 gelöst.

Demgemäß wird bei einem Verfahren zum Bilden eines Strukturbauteils eines Luft- oder Raumfahrzeuges ein mindestens einen Gurt aufweisender Vorformling mittels Umflechten eines Kerns gebildet so wie in DE-A-103 26 422 offenbart wird. In den mindestens einen Gurt des Vorformlings wird ein Trennschnitt mindestens abschnittweise zum Bilden zweier Gurtabschnitte des mindestens einen Gurtes eingebracht. Mittels eines entlang des Trennschnittes führbaren Umformwerkzeuges erfolgt dann ein Umformen der beiden gebildeten Gurtabschnitte des mindestens einen Gurtes in eine vorbestimmte Form. Eine Umformvorrichtung dient zur Durchführung des Verfahrens. Ein Strukturbauteil ist nach dem Verfahren und/oder mittels der Umformvorrichtung hergestellt.

Weiterhin wird eine Umformvorrichtung zum Bilden eines Strukturbauteils eines Luft- oder Raumfahrzeuges bereitgestellt. Sie weist Folgendes auf
einen Werkzeugkörper, welcher eine Aufnahme zum Aufnehmen eines geflochtenen, mindestens einen Gurt aufweisenden Vorformlings besitzt;
mindestens eine Schneideeinrichtung zum Einbringen eines Trennschnittes mindestens abschnittweise in den mindestens einen Gurt des Vorformlings zum Bilden zweier Gurtabschnitte des mindestens einen Gurtes; und
mindestens ein entlang des Trennschnittes führbares Umformwerkzeug zum Umformen der beiden gebildeten Gurtabschnitte des mindestens einen Gurtes (3, 4) in eine vorbestimmte Form.

Somit weist die vorliegende Erfindung gegenüber den eingangs genannten Ansätzen den Vorteil auf, dass die automatisierte Flechttechnik auch zur Herstellung von durch Flechttechnik bisher nicht herstellbaren Profilen mit all ihren Vorteilen verwendbar ist.

In den Unteransprüchen finden sich vorteilhafte Ausgestaltungen und Verbesserungen der vorliegenden Erfindung.

Eine Grundidee der Erfindung besteht darin, durch einfaches Bearbeiten, zum Beispiel Einbringen eines Trennschnittes in einem Vorformling, als Vorbereitung diesen so umzuformen, dass ein neues Profil aus dem Ausgangsprofil entsteht.

Bei einer derartigen Umformung bzw. Transformation eines geflochtenen Vorformlings, zum Beispiel aus einem Vorformling für ein C-Profil in ein Z-Profil, ist das Beibehalten der Faserorientierung in den betroffenen umzuformenden Lagen von großer Bedeutung. Bei gekrümmten Profilen ist es wichtig zu entscheiden, welcher der Gurte umgeformt wird. Dabei ist zum Beispiel bei einem Spant mit einem Außendurchmesser und einem Innendurchmesser unter einem Innengurt der Gurt mit dem kleineren Durchmesser und unter dem Außengurt der Gurt mit dem größeren Durchmesser zu verstehen. Im Fall des Außengurts werden die Fasern beim Umformen gezwungen, sich an den großen Radius anzupassen, d.h. sie werden gezogen. Bei mehreren Lagen und einer Faserorientierung von ±45° oder 90° kann dies zu lokalen Faserlücken führen. Sobald sich die Fasern in 0° zwischen den Diagonalen befinden, werden diese versuchen, sich während des Umformens nach innen zu verschieben, weil die Länge der Faser gleich bleibt. Wenn aber der Innengurt umgeformt wird, dann werden die Fasern gestaucht, was während des Umformungsprozesses zu lokalen Faltungen führen kann. Die Änderung des Übergangsradius bei den einzelnen Lagen kann auch zu Verschiebungen zwischen den Lagen führen, d.h. es muss die Möglichkeit geschaffen werden, dass sich die Lagen zwischen einander verschieben können, ohne die Faser zu ondulieren. Das setzt wiederum voraus, dass bei dem gleichzeitigen Umformen mehrlagiger Vorformlinge die Lagen aufeinander gleiten sollen, ohne miteinander zu verhaken. Das Verschieben zwischen den Lagen führt am betroffenen Gurt zum so genannten Bucheffekt, d.h. dort wird eine Kante gestapelt aufgebaut.

Es ist auch möglich, dass ein Querschnitt, z.B. dreieckformig, eines Vorformlings nur einen Gurt aufweist.

Zu diesem Zweck sieht die Erfindung vor, dass der Kern mit mindestens zwei Geflechtlagen umflochten wird, wobei der mindestens eine Gurt mit Trennlagen zwischen jeweils zwei Geflechtlagen versehen wird. Dabei ist es von Vorteil, wenn diese Trennlagen zum Beispiel aus Trennfolie gebildet sind.

Durch mechanisches Umklappen von Gurtabschnitten, d.h. von Geflechtteilen bzw. Abschnitten von Geflechtlagen, kann man unter anderem die bis jetzt für das Flechten nicht erreichbaren Geometrien erzeugen. So kann auch die Herstellung von Z-Profilen mit variablen Querschnitten umgesetzt werden.

Bei Vorformlingen mit mehr als einem Gurt, zum Beispiel mit einem Außen- und einem Innengurt, kann nicht nur der Außengurt, sondern auch der Innengurt umgeformt werden. Dadurch können auch die auf der Basis einzelner Preforms entstandenen Geflechte mehrere sich voneinander leicht unterscheidende Bauteile liefern, da die Endgeometrie erst während des Umformens bestimmt wird.

Es ist bevorzugt, dass das Umformen durch Umklappen der gebildeten Gurtabschnitten lagenweise erfolgt. Dadurch wird ein Risiko von Faserlücken und -fehlstellen erheblich vermindert. Es ist wichtig, dass die Fasern der Geflechtlagen beim Umformen ihre Faserorientierung beibehalten und durch das Umformwerkzeug nicht beschädigt werden. Dazu ergeben die Trennlagen weiterhin den Vorteil, dass sie die umzuformenden Fasern vor Beschädigungen, z.B. durch ein Umformwerkzeug beim Umformen schützen. Sie ermöglichen außerdem beim lagenweisen Umklappen ein leichtes Trennen der einzelnen Lagen voneinander.

Die jeweiligen Trennlagen werden nach jedem lagenweise Umklappen von Gurtabschnitten entfernt und durch vorher vorbereitete Gurtlagen, z.B. von unidirektionalen (UD) Fasergeweben, ersetzt, die dann fixiert werden. Dies kann zum Beispiel durch eine Entfernungseinrichtung durchgeführt werden, die mit einer Legeeinrichtung zusammenwirkt bzw. zusammen angeordnet ist.

Durch das Umformen können auch Bauteile mit konkaven Flächen oder konvexen Flächen gefertigt werden, was bis heute durch Flechten nicht möglich war. Dazu kann zum Beispiel ein Werkzeugkörper der Umformvorrichtung entsprechende konkave und/oder konvexe Abschnitte im Bereich der umzuformenden Lagenabschnitte aufweisen, wobei das Umformwerkzeug hierzu mit entsprechenden Drückvorrichtungen, z.B. Druckrollen, ausgerüstet sein kann.

Nach dem Umklappen von Gurtabschnitten wird so ein umgeformter Vorformling gebildet. Bei diesem kann ein anderer Gurt oder auch ein anderer, vorbestimmter Abschnitt in Längsrichtung des umgeformten Vorformlings getrennt werden, um zwei voneinander getrennte, umgeformte Vorformlinge zu erhalten. So kann zum Beispiel aus einem geflochtenen Rechteckprofil durch erstes Trennen des Innengurtes und Umformen der zugehörigen Gurtabschnitte ein Ω-Profil erzeugt werden. Durch zweites Trennen des anderen Gurtes erhält man dann zwei Z-Profile.

Der gesamte Prozess kann fast vollständig vorteilhaft automatisch ablaufen, wodurch die Voraussetzungen für eine industrielle Umsetzung erfüllt sind. Diese Umformtechnik eröffnet völlig neue Anwendungsmöglichkeiten des Flechtverfahrens mit seinen eigenen Vorteilen, da in dem Flechtprozess reines Halbzeug entsteht, das erst nach Umformen eine endgültige Geometrie erhält.

Zum Ersetzen der Trennlagen weist die Umformvorrichtung mindestens eine Entfernungseinrichtung zum Entfernen der Trennlagen und eine Legeeinrichtung zum Legen von Gurtlagenabschnitten auf dem umgeformten Vorformling auf. Die Legeeinrichtung kann gleichzeitig mit einer Entfernungseinrichtung für die Trennlagen kombiniert sein, wobei ein automatisierter Verfahrensablauf vorteilhaft beschleunigt wird.

Es ist wichtig, dass die Geflechtlagen während des Umformens nicht zu hoch gehoben werden, da sonst entweder lokale Faltungen oder lokale Lücken entstehen können. Aus diesem Grund ist vorgesehen, dass das Umformwerkzeug eine Gestalt eines Pflugs oder eines Schneeräumers mit seitlichen Umformflächen besitzt, welche in der Längsrichtung des Umformwerkzeugs unter einem vorbestimmten Winkel aufeinander zulaufen, wobei sie an einer Frontseite des Umformwerkzeugs in einer Schneide verbunden sind.

Hierzu kann die Umformfläche des Umformwerkzeugs einen Steg mit mindestens einer Kehle aufweisen, wobei die Kehle an ihrem oberen Ende in eine Führungsfläche übergeht. Ein Radius der Kehle weist einen relativ kleinen Wert auf. Dadurch können keine Faltungen oder lokale Lücken entstehen. Die Umformflächen des Umformwerkzeugs sind zum Bilden einer vorbestimmten Umformung der umzuformenden Abschnitte des Vorformlings entsprechend ausgestaltet. Dazu kann zum Beispiel vorgesehen sein, dass die Umformfläche des Umformwerkzeugs so ausgebildet ist, dass ein Abstand von Fasern der umzuformenden Abschnitte des Vorformlings zu einer Mittelachse des Vorformlings beim Umformvorgang minimal ist.

In einer weiteren Ausbildung der Umformvorrichtung kann das Umformwerkzeug die Schneideeinrichtung aufweisen. Zum Beispiel kann diese Schneideeinrichtung in den Steg an der Frontseite des Umformwerkzeugs angebracht sein, indem diese Kante als Schneide ausgebildet ist. Beim Vorwärtsbewegen des Umformwerkzeugs wird die Schneide zunächst die Geflechtlage des Gurtes durchtrennen und dann umklappen. Der zu trennende Gurt bzw. dessen Geflechtlage kann auch durch einen Vorschneider eingeritzt sein, um den Schneidevorgang zu erleichtern.

Ein Strukturbauteil für die Luft- und Raumfahrt ist gemäß dem oben beschriebenen Verfahren und/oder mittels der oben erläuterten Umformvorrichtung hergestellt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische, perspektivische Schnittansicht eines Vorformlings gemäß eines Ausführungsbeispiels zur Erläuterung eines erfindungsgemäßen Verfahrens;
- Fig. 2: der Vorformling nach Fig. 1 nach einem weiteren Schritt des erfindungsgemäßen Verfahrens;
- Fig. 3: der Vorformling nach Fig. 2 nach einem weiteren Schritt des erfindungsgemäßen Verfahrens mit einem Ausführungsbeispiel einer erfindungsgemäßen Umformvorrichtung;
- Fig. 4a-c: schematische, perspektivische Ansichten eines Ausführungsbeispiels eines Umformwerkzeugs mit Teilschnitten;
- Fig. 4d: eine schematische, perspektivische Vorderansicht des Umformwerkzeugs nach Fig. 4a-c;
- Fig. 4e: eine schematische Seitenansicht gemäß Ansicht A des Umformwerkzeugs nach Fig. 4d;
- Fig. 5: der Vorformling nach Fig. 3 nach einem weiteren Schritt des erfindungsgemäßen Verfahrens in der erfindungsgemäßen Umformvorrichtung;
- Fig. 6: der umgeformte Vorformling nach Fig. 5 nach einem weiteren Schritt des erfindungsgemäßen Verfahrens in der erfindungsgemäßen Umformvorrichtung; und
- Fig. 7: eine schematische Schnittansicht eines getrennten, umgeformten Vorformlings.

In den Figuren bezeichnen dieselben Bezugszeichen gleiche oder funktionsgleiche Komponenten, soweit nichts Gegenteiliges angegeben ist. Koordinaten x, y und z dienen zur Erleichterung der Orientierung.

Die Ergänzung "-1" und "-2" bei gleichen Bezugszeichen gibt an, dass es sich um gegenüberliegende Abschnitte bzw. Teile handelt.

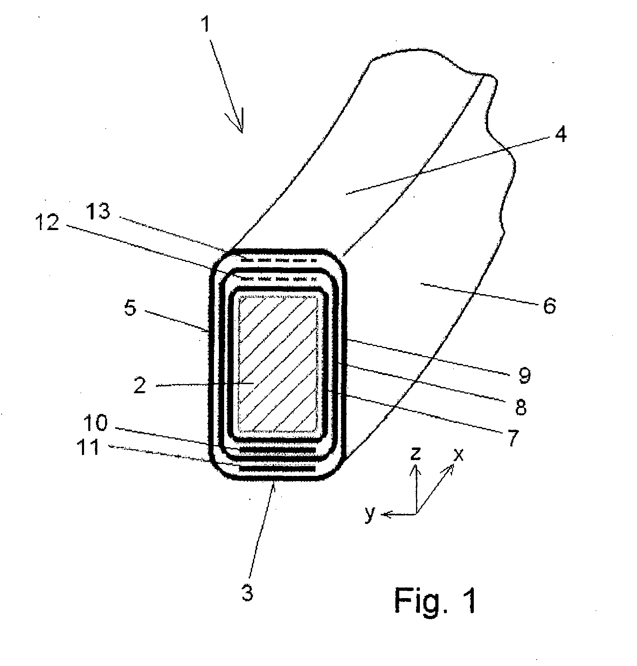

Fig. 1 zeigt eine schematische, perspektivische Schnittansicht eines Vorformlings 1 gemäß eines Ausführungsbeispiels zur Erläuterung eines erfindungsgemäßen Verfahrens. In einem ersten Verfahrensschritt wird der Vorformling 1 in einem Flechtverfahren hergestellt. Dabei wird ein Kern 2, hier mit einem rechteckigen Querschnitt, mit Fasern umflochten, wobei in diesem Beispiel ein dreilagiger Vorformling 1 entsteht. Hier werden diagonale Lagen zum Beispiel als biaxiales oder UD-Geflecht (UD bedeutet unidirektional) gefertigt, wobei eine erste Innengeflechtlage 7 direkt auf dem Kern 2 liegt. Darauf wird eine Mittelgeflechtlage 8 gewickelt, welche von einer Außengeflechtlage 9 umflochten wird.

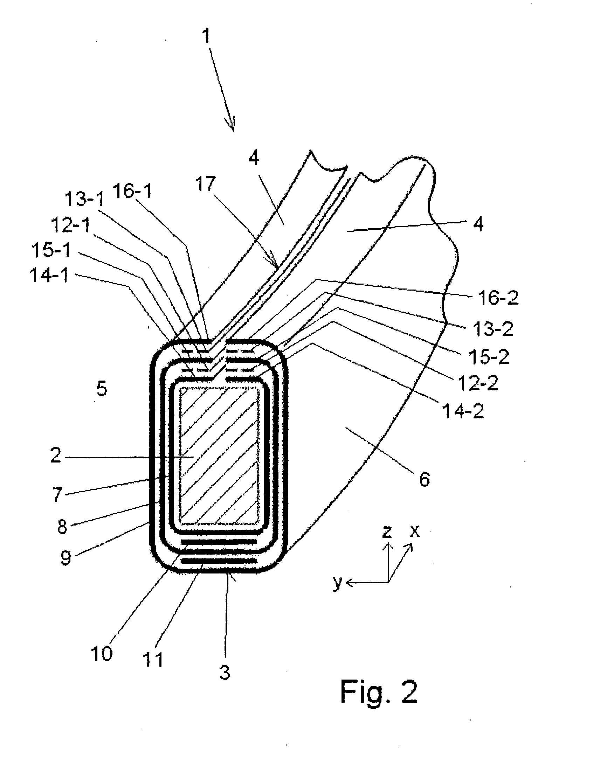

Der Vorformling 1 weist eine gekrümmte Struktur auf, wie in der Fig. 1 zu sehen ist. Er besitzt Gurte 3 und 4, wobei der Gurt 4 auch als Innengurt und der Gurt 3 als Außengurt bezeichnet wird. Diese Gurte sind über Profilstege 5, 6 verbunden. Nach dem Flechten der Innengeflechtlage 7 wird auf dem Außengurt 3 eine erste Gurtlage 10 aus UD-Gelege in Längsrichtung des Vorformlings 1, d.h. in x-Richtung, abgelegt. In diesem Beispiel ist der Innengurt 4 für eine Umformung vorgesehen, die durch einen Trennschnitt 17 (siehe Fig. 2) vorbereitet wird. Daher wird auf dem Innengurt 4 eine Trennlage 12 anstelle einer Gurtlage platziert. Die Trennlage kann z.B. eine Trennfolie sein. In gleicher Weise wird zwischen der Mittelgeflechtlage 8 und der Außengeflechtlage 9 auf dem Außengurt 4 eine zweite Gurtlage 11 und auf dem Innengurt 3 eine zweite Trennlage 13 abgelegt. Dann wird die Außengeflechtlage 9 aufgebracht. Die Trennlagen 12, 13 simulieren dabei die Dicke der Gurtlagen 10, 11 auf der Seite des Innengurtes 4, damit eine gleichmäßige Gestalt des Vorformlings 1 erzielt wird.

Der Vorformling 1 ist nun als Flechtbauteil mit einem geschlossenen Querschnitt der Geflechtlagen 7 bis 9 angefertigt. Das Flechten erfolgt in einer entsprechenden Flechtvorrichtung mit Einzelfasern, mehreren Fasern und/oder auch Faserbündeln oder dergleichen.

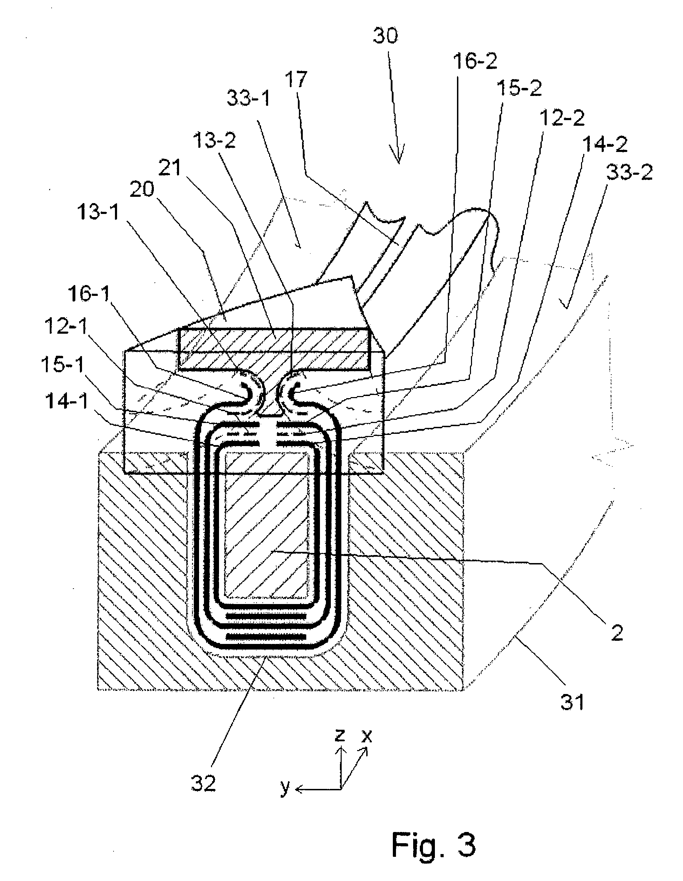

Der so erstellte Vorformling 1 wird dann in einem zweiten Verfahrensschritt, den Fig. 2 illustriert, mit einer Schneideeinrichtung, die Bestandteil einer Umformvorrichtung 30 (siehe Fig. 3) sein kann, dergestalt bearbeitet, dass der Innengurt 4 mit einem Trennschnitt 17 in Längsrichtung x des Vorformlings 1 versehen wird. Der Trennschnitt 17 kann durch alle Geflechtlagen 7 bis 9 gleichzeitig erfolgen. Es ist aber auch möglich, dass der Trennschnitt 17 lagenweise ausgeführt wird. Der Trennschnitt 17 kann auch an einem beliebigen Ort mit einer geeigneten Schneideeinrichtung ausgeführt werden.

Durch den Trennschnitt 17 wird der Gurt 4, hier der Innengurt 4 pro Geflechtlage in jeweils zwei Gurtabschnitte aufgeteilt wird, nämlich: zwei Innenlagen-Gurtabschnitte 14-1 und 14-2, zwei Mittellagen-Gurtabschnitte 15-1 und 15-2, und zwei Außenlagen-Gurtabschnitte 16-1 und 16-2. Auch die Trennlagen 12 und 13 werden jeweils in Trennlagenabschnitte 12-1 und 12-2 sowie 13-1 und 13-2 geteilt.

In Fig. 3 ist dargestellt, dass der Vorformling 1 nach Fig. 2 in einem weiteren Schritt des erfindungsgemäßen Verfahrens in einer Umformvorrichtung 30, gezeigt als ein mögliches Ausführungsbeispiel einer erfindungsgemäßen Umformvorrichtung 30, aufgenommen ist.

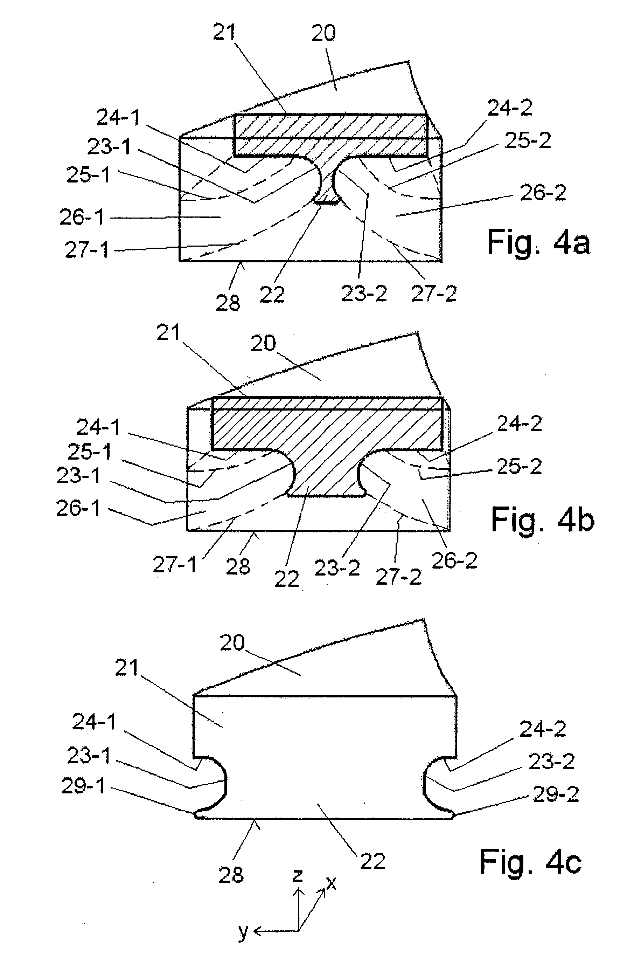

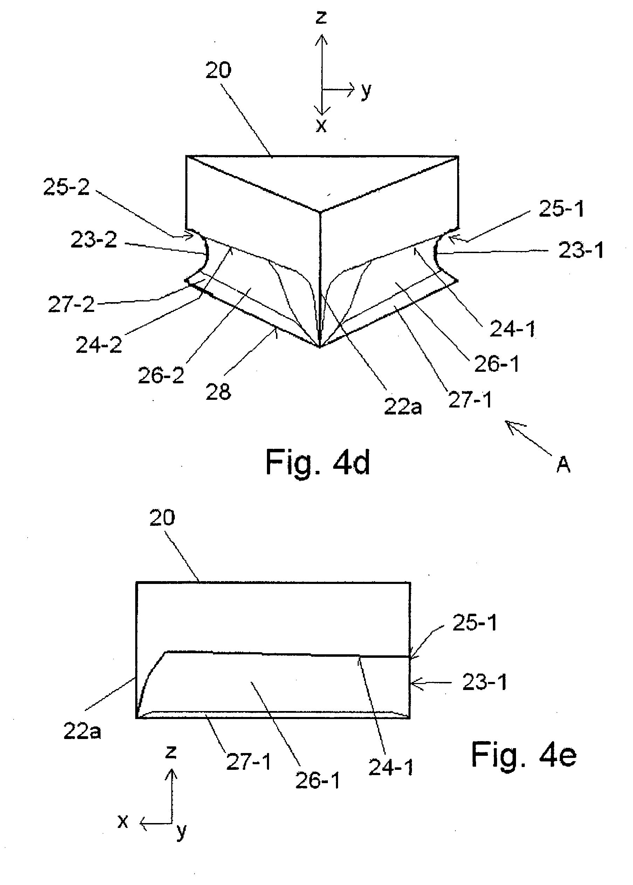

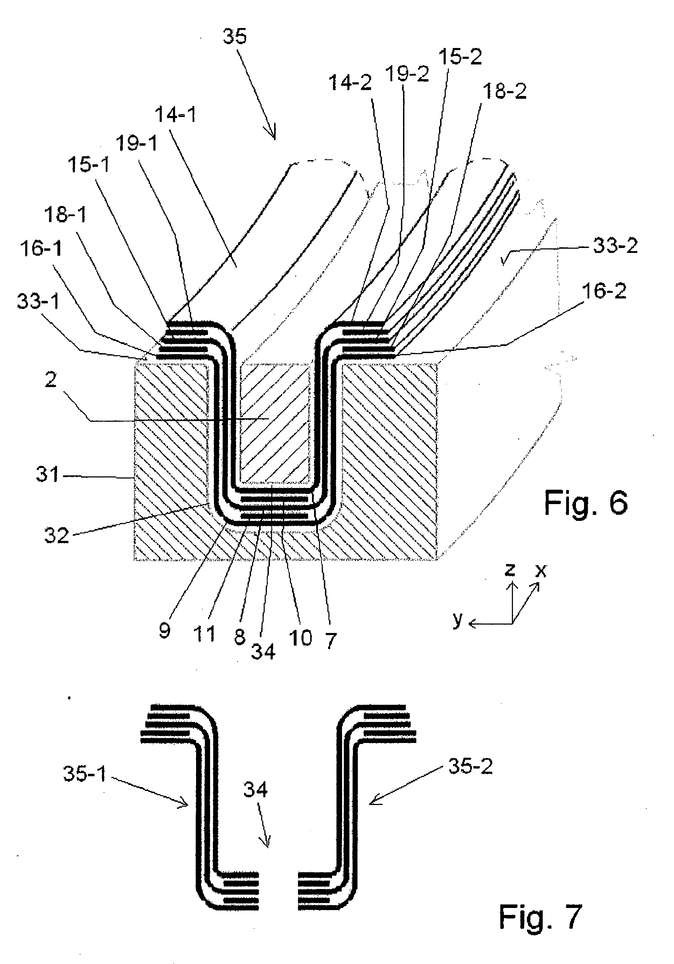

Die Umformvorrichtung 30 weist hier einen Werkzeugkörper 31 mit einer Aufnahme 32 auf, welche beiderseits in Längsrichtung x jeweils eine Werkzeugoberseite 33-1 und 33-2 besitzt. Der Vorformling 1 ist mit seinem Kern 2 in die Aufnahme 32 eingesetzt. Der zur Umformung durch den Trennschnitt 17 vorbereitete Innengurt 4 mit seinen geteilten Gurtabschnitten 14-1, 14-2, 15-1, 15-2, 16-1 und 16-2 ragt aus der Aufnahme 32 nach oben heraus. Ein Umformwerkzeug 20, welches weiter unten noch näher erläutert wird, ist in x-Richtung, d.h. in Längsrichtung des Werkzeugs 31 und des Vorformlings 1 geführt angeordnet und mit seinem Vorderteil (siehe Fig. 4d) in den Trennschnitt 17 in der Außengeflechtlage 9 zwischen den Außenlagen-Gurtabschnitte 16-1 und 16-2 eingeführt. Dabei werden die Außenlagen-Gurtabschnitte 16-1 und 16-2 zusammen mit der zweiten Trennlage 13-1 und 13-2 jeweils durch einen Umformquerschnitt 21 des Umformwerkzeugs 20 umgeformt. Der Umformquerschnitt 21 ist hier nur beispielhaft an einer bestimmten x-Position der Längsrichtung des Umformwerkzeugs 20 gezeigt Die Außenlagen-Gurtabschnitte 16-1 und 16-2 werden zusammen mit der zweiten Trennlage 13-1 und 13-2 jeweils durch Umformflächen 26-1 und 26-2 (siehe Fig. 4a-d) derart geführt und umgeformt, dass sie zunächst in einem kleinen Radius umgebogen bzw. umgeklappt werden. Durch Weiterbewegen des Umformwerkzeugs 20 in x-Richtung werden die Außenlagen-Gurtabschnitte 16-1 und 16-2 zusammen mit der zweiten Trennlage 13-1 und 13-2 schließlich vollständig (hier um ca. 180° zu ihrer vorherigen Lage umgeklappt), was in Fig. 6 und 7 gezeigt und im Bezug dazu unten noch detaillierter beschrieben wird. Die Trennlagen 12, 13 schützen dabei die einzelnen Gurtabschnitte 16-1 und 16-2, 15-1 und 15-2, 14-1 und 14-2 vor Beschädigungen durch das Umformwerkzeug 20. Gleichzeitig ermöglichen sie ein leichtes Trennen der Geflechtlagen beim Umformen. Das Umformwerkzeug 20 ist so ausgebildet, dass beim Umformen der Abstand der Fasern der jeweiligen Lagen-Gurtabschnitte 16-1 und 16-2, 15-1 und 15-2, 14-1 und 14-2 zur Mittelachse des Vorformlings 1, die hier in dessen Längsrichtung, also in x-Richtung, verläuft, in einem minimalen Abstand gehalten werden.

Das Umformwerkzeug 20 ist in Fig. 4a bis 4c in schematischen, perspektivischen Ansichten eines Ausführungsbeispiels mit Teilschnitten gezeigt. Eine Vorderansicht illustriert Fig. 4d.

Das Umformwerkzeug 20 weist eine Unterseite 28 auf, die entsprechend glatt ausgebildet und/oder entsprechend beschichtet ist, um einen möglichst geringen Reibungswert zwischen der Unterseite 28 und den Lagen-Gurtabschnitten 16-1 und 16-2, 15-1 und 15-2, 14-1 und 14-2 bzw. der Trennlagen 12, 13 zu gewährleisten. Das Umformwerkzeug 20 ist in der Gestalt eines Pfluges (hier mit zwei Scharen) bzw. eines Schneeräumers ausgebildet und in der Draufsicht dreieckförmig. Seine Vorderseite ist in Fig. 4d gezeigt und besitzt eine Schneide 22a, die in einen Steg 22 entgegengesetzt zur Bewegungsrichtung (negative x-Richtung) des Ümformwerkzeugs 20 übergeht, der in Abhängigkeit von der x-Koordinaten in negativer x-Richtung hin sich verbreitert und schließlich die Rückseite (Fig. 4c) des Umformwerkzeugs 20 fast vollständig bildet. Dazu stellen die Figuren 4a bis 4c den Umformquerschnitt 21 an verschiedenen x-Positionen der Längsrichtung des Umformwerkzeugs 20 dar.

Beiderseits des Stegs 22 ist jeweils eine Kehle 23-1, 23-2 angeordnet, wobei die Kehle 23-1, 23-2 an ihrem oberen Ende über einen Kehlenauslauf 25-1, 25-2 in eine Führungsfläche 24-1, 24-2 übergeht. Nach unten hin ist die Kehle 23-1, 23-2 mit einem Kehleneinlauf 27-1, 27-2 und einer Unterkante 29-1, 29-2 ausgebildet, die einen besonders kleinen Radius aufweist, mit welchem zwischen die Lagen-Gurtabschnitten 16-1 und 16-2, 15-1 und 15-2, 14-1 und 14-2 eingegriffen wird, um diese voneinander zu trennen. Die Kehle 23-1, 23-2 verläuft mit einem vorbestimmten Radius von der Vorderseite des Umformwerkzeugs 20 (siehe Fig. 4d) zur seiner Rückseite (siehe Fig. 4c), wobei sie in einem Winkel zur Mittellinie des Umformwerkzeugs 20 (Fig. 4d) in Längsrichtung des Umformwerkzeugs 20 zu dessen Rückseite hin nach außen, also quer in y-Richtung, wandert.

Über die gesamte Länge des Umformwerkzeugs 20 bildet die Kehle 23-1, 23-2 zusammen mit der Führungsfläche 24-1, 24-2, dem Kehlenauslauf 25-1, 25-2 und dem Kehleneinlauf 27-1, 27-2 auf jeder Längsseite des Umformwerkzeugs 20 jeweils eine Umformfläche 26-1, 26-2 zur Umformung des jeweiligen Lagen-Gurtabschnitts 16-1 und 16-2, 15-1 und 15-2, 14-1 und 14-2 beim Umklappen desselben. Die Umformflächen 26-1, 26-2 sind symmetrisch zur Mittellinie des Umformwerkzeugs 20 in einem Winkel angeordnet, wobei die Mittellinie in x-Richtung, d.h. Bewegungsrichtung des Umformwerkzeugs 20, verläuft. Die Umformflächen 26-1, 26-2 sind entsprechend dem Werkstoff der Geflechtlagen 7, 8, 9 aus einem Werkstoff, der mit diesen eine Reibpaarung mit einem äußerst geringen Reibungswert ergibt. Dazu kann die jeweilige Umformfläche 26-1, 26-2 auch beschichtet sein, z.B. mit Teflon®, wie auch die Unterseite 28 des Umformwerkzeugs 20.

Die Umformflächen 26-1 und 26-2 sind an einer Frontseite des Umformwerkzeugs 20 in der Schneide 22a verbunden.

Fig. 4d zeigt in einer Vorderansicht des Umformwerkzeugs 20 dessen pflugartige Gestalt. Selbstverständlich sind andere Formen möglich. Die Schneide 22a kann auch als scharfe Schneide ausgebildet sein, dass sie den Trennschnitt 17 oder ein Aufschneiden eines voreingeschnittenen Trennschnitts 17 auftrennen kann.

Fig. 4e zeigt eine Seitenansicht A des Umformwerkzeugs 20 nach Fig. 4d. In diesem Beispiel ist zu erkennen, dass die Führungsfläche 24-1 (24-2 ebenso auf der anderen Seite) mit ihrer Außenkante von der Schneide 22a, also von der Vorderseite des Umformwerkzeugs 20 nach unten in einem Winkel geneigt nach hinten verläuft. An der Schneide 22a geht diese Außenkante der Führungsfläche 24-1 in die Schneide 22a nach unten verlaufend über.

Das Umformwerkzeug 20 ist an der Umformvorrichtung 30 an einer Längsführung (nicht gezeigt) geführt, welche dem Verlauf des Vorformlings 1, d.h. des Werkzeugkörpers 31 folgt. Es kann automatisiert angetrieben werden, wobei eine Zustellung in z-Richtung möglich ist, um eine lagenweise Umformung der Lagen-Gurtabschnitte 16-1 und 16-2, 15-1 und 15-2, 14-1 und 14-2 vorzunehmen.

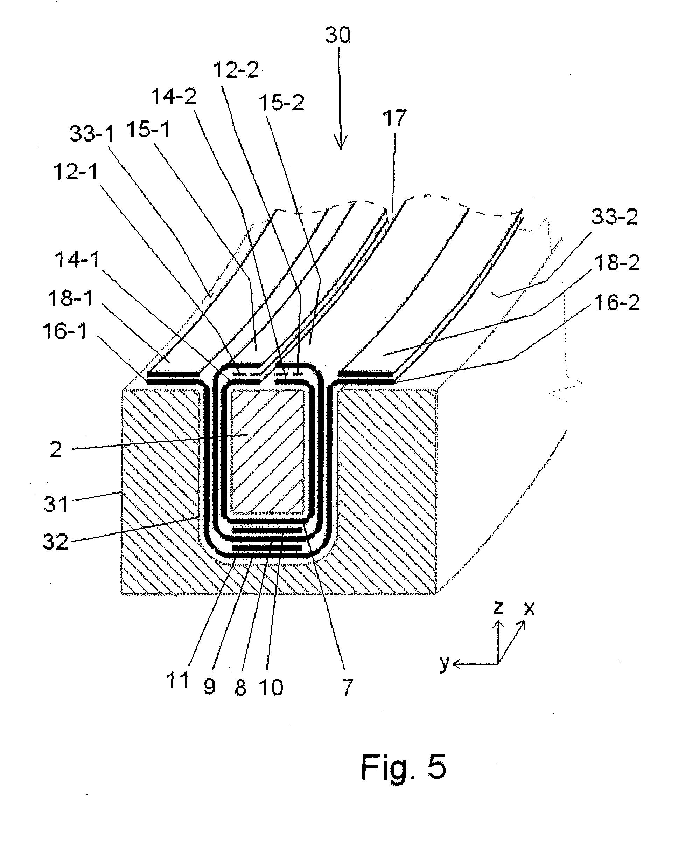

Fig. 5 zeigt den Vorformling 1 nach Fig. 3 nach einem weiteren Schritt des erfindungsgemäßen Verfahrens in der erfindungsgemäßen Umformvorrichtung 30. Die Lagen-Gurtabschnitte 16-1 und 16-2 sind durch das Umformwerkzeug 20 umgeklappt worden. In diesem Beispiel sind sie um ca. 180° auf die Werkzeugoberseiten 33-1 und 33-2 aufgebracht. Selbstverständlich können andere Winkel als 180°, größer oder kleiner umgeformt werden.

Von den so umgeklappten Lagen-Gurtabschnitte 16-1 und 16-2 werden die Trennlagenabschnitte 13-1 und 13-2 entfernt (hier in Fig. 5 bereits erfolgt) und durch erste Gurtlagenabschnitte 18-1, 18-2 ersetzt, welche durch eine Legeeinrichtung (nicht gezeigt) auf die umgeklappten Lagen-Gurtabschnitte 16-1 und 16-2 anstelle der Trennlagenabschnitte 13-1 und 13-2 aufgelegt und fixiert werden. Die Gurtlagenabschnitte 18-1, 18-2 sind zum Beispiel an anderem Ort vorbereitete UD-Gelege.

Danach erfolgt das Umklappen der nächsten Lagen-Gurtabschnitten 15-1 und 15-2, 14-1 und 14-2 durch das Umformwerkzeug 20 mit anschließendem Entfernen der Trennlagenabschnitte 12-1 und 12-2 und Ersetzen dieser durch zweite Gurtlagenabschnitte 19-1, 19-2 wie oben bereits beschrieben. Es ergibt sich dann ein umgeformter Vorformling nach Fig. 5.

Der so erzielte umgeformte Vorformling 1 weist eine Art U-Profil oder auch Ω-Profil auf.

Der Werkzeugkörper 31 kann Bestandteil eines Formwerkzeugs sein, dass zum Tränken und Aushärten des umgeformten Vorformlings 1 geschlossen werden kann. Dazu wird der umgeformte Vorformling 1 in dem Werkzeugkörper 31 mit Matrixwerkstoff getränkt und z.B. in einem Autoklav ausgehärtet, wonach dann der Kern 2 entfernt wird.

Ein weiterer Schritt kann darin bestehen (auch vor dem Tränken und Aushärten möglich), dass nun der Außengurt 4 durch einen zweiten Trennschnitt 34 getrennt wird, woraus sich zwei umgeformte Vorformlinge 1-1 und 1-2 mit Z-Profil ergeben.

Auf diese Weise kann eine Umformung eines geflochtenen Vorformlings 1 mit einem geschlossenen Querschnitt umgeformte Vorformlinge 1-1, 1-2 mit einer Vielzahl von unterschiedlichen Profilformen ergeben, wobei die Vorteile der Flechttechnik zum Tragen kommen.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Zum Beispiel kann der Trennschnitt 17 lagenweise nur eine Art Ritzen oder Einschneiden der jeweiligen Geflechtlage 7. bis 9 des Innengurtes 4 sein, wobei das Umformwerkzeug 20 mit der voraneilenden Schneide 22a (Fig. 4d) den eingeschnittenen bzw. vorgeritzten Trennschnitt 17 lagenweise vollständig auftrennt.

Der zweite Trennschnitt 34 kann auch an unterschiedlichen Stellen erfolgen, so dass zum Beispiel die sich ergebenden Z-Profile unterschiedlich sind und im Extremfall ein L-Profil und ein Z-Profil erhalten werden.

Beim Umformen können auch Bauteile mit konkaven (und/oder konvexen) Flächen erzeugt werden. Dazu kann die Werkzeugoberseite 33-1, 33-2 an vorbestimmten Positionen konkave Einbuchtungen oder konvexe Ausbuchtungen aufweisen, an welche die umgeklappten Lagen-Gurtabschnitte 16-1 und 16-2, 15-1 und 15-2, 14-1 und 14-2 durch das Umformwerkzeug 20 mit einer entsprechenden Erweiterung, z.B. Druckrollen, angepasst werden können. So können auch Formen erzeugt werden, die mittels Flechttechnik so nicht erzielbar wären.

Es ist auch denkbar, dass der Vorformling 1 nur zwei Geflechtlagen oder auch mehr aufweisen kann.

Es ist besonders vorteilhaft, dass der Werkzeugkörper 31 so beschaffen ist, dass er gleichzeitig zum Umformen des Vorformlings 1 wie auch zum Tränken und Aushärten des umgeformten Vorformlings verwendbar sein kann.

Ein Vorformling 1 mit einem dreieckförmigen Querschnitt ist auch denkbar, wobei zum Beispiel eine Seite einen zu trennenden Gurt bildet und die anderen zwei Seiten als Stege dienen.

Bei einem Verfahren zum Bilden eines Strukturbauteils eines Luft- oder Raumfahrzeuges wird mindestens einen Gurt 4 aufweisender Vorformling 1 mittels Umflechten eines Kerns 2 gebildet. In den mindestens einen Gurt 4 des Vorformlings 1 wird ein Trennschnitt 17 mindestens abschnittweise zum Bilden zweier Gurtabschnitte 14-1, 14-2; 15-1, 15-2; 16-1, 16-2 des mindestens einen Gurtes 4 eingebracht. Mittels eines entlang des Trennschnittes 17 führbaren Umformwerkzeuges 20 erfolgt dann ein Umformen der beiden gebildeten Gurtabschnitte 14-1, 14-2; 15-1, 15-2; 16-1, 16-2 des mindestens einen Gurtes 4 in eine vorbestimmte Form. Eine Umformvorrichtung 30 dient zur Durchführung des Verfahrens. Ein Strukturbauteil ist nach dem Verfahren und/oder mittels der Umformvorrichtung hergestellt.

### Bezugszeichenliste

- 1: Vorformling
- 2: Kern
- 3, 4: Gurt
- 5, 6: Profilsteg
- 7: Innengeflechtlage
- 8: Mittelgeflechtlage
- 9: Außengeflechtlage
- 10, 11: Gurtlagen
- 12, 13: Trennlagen
- 14-1, 14-2: Innenlagen-Gurtabschnitt
- 15-1, 15-2: Mittellagen-Gurtabschnitt
- 16-1, 16-2: Außenlagen-Gurtabschnitt
- 17: Trennschnitt
- 18-1, 18-2: Erster Gurtlagenabschnitt
- 19-1, 19-2: Zweiter Gurtlagenabschnitt
- 20: Umformwerkzeug
- 21: Umformquerschnitt
- 22: Steg
- 22a: Schneide
- 23-1, 23-2: Kehle
- 24-1, 24-2: Führungsfläche
- 25-1, 25-2: Kehlenauslauf
- 26-1, 26-2: Umformfläche
- 27-1, 27-2: Kehleneinlauf
- 28: Unterseite
- 29-1, 29-2: Unterkante
- 30: Umformvorrichtung
- 31: Werkzeugkörper
- 32: Aufnahme
- 33-1, 33-2: Werkzeugoberseite
- 34: Zweiter Trennschnitt
- 35, 35-1, 35-2: Umgeformter Vorformling
- x, y, z: Koordinaten

## Patentansprüche

1. Verfahren zum Bilden eines Strukturbauteils eines Luft- oder Raumfahrzeuges, mit folgenden Verfahrensschritten:
Bilden eines mindestens einen Gurt (4) aufweisenden Vorformlings (1) mittels Umflechten eines Kerns (2) ;
**gekennzeichnet durch** Einbringen eines Trennschnittes (17) mindestens abschnittweise in den mindestens einen Gurt (4) des Vorformlings (1) zum Bilden zweier Gurtabschnitte (14-1, 14-2; 15-1, 15-2; 16-1, 16-2) des mindestens einen Gurtes (4); und
Umformen der beiden gebildeten Gurtabschnitte (14-1, 14-2; 15-1, 15-2; 16-1, 16-2) des mindestens einen Gurtes (4) in eine vorbestimmte Form mittels eines entlang des Trennschnittes (17) führbaren Umformwerkzeuges (20).

2. Verfahren nach Anspruch 1,
**dadurch gekennzeichnet,**
**dass** der Kern (2) mit mindestens zwei Geflechtlagen (7, 8, 9) umflochten wird, wobei der mindestens eine Gurt (4) mit Trennlagen (12, 13) zwischen jeweils zwei Geflechtlagen (7, 8, 9) versehen wird.

3. Verfahren nach Anspruch 1 oder 2,
**dadurch gekennzeichnet,**
**dass** das Umformen der beiden gebildeten Gurtabschnitte (14-1, 14-2; 15-1, 15-2; 16-1, 16-2) durch Umklappen dieser Gurtabschnitte (14-1, 14-2; 15-1; 15-2; 16-1, 16-2) lagenweise durchgeführt wird.

4. Verfahren nach Anspruch 3,
**dadurch gekennzeichnet,**
**dass** nach jedem lagenweise Umklappen der Gurtabschnitte (14-1, 14-2; 15-1; 15-2; 16-1, 16-2) die jeweiligen Trennlagen (12, 13) entfernt und an ihrer Stelle vorbestimmte Gurtlagen (18-1, 18-2; 19-1, 19-2) abgelegt und fixiert werden.

5. Verfahren nach Anspruch 3 oder 4,
**dadurch gekennzeichnet,**
**dass** durch das Umklappen der Gurtabschnitte (14-1, 14-2; 15-1; 15-2; 16-1, 16-2) ein umgeformter Vorformling (35) gebildet wird, welcher in Längsrichtung an einer vorbestimmten Position getrennt wird, um zwei voneinander getrennte, umgeformte Vorformlinge (35-1, 35-2) zu erhalten.

6. Verfahren nach mindestens einem der vorhergehenden Ansprüche,
**dadurch gekennzeichnet,**
**dass** nach dem Umformen der beiden gebildeten Gurtabschnitte (14-1, 14-2; 15-1, 15-2; 16-1, 16-2) der derart umgeformte Vorformling (35) mit einer Matrix getränkt und gehärtet wird.

7. Verfahren nach mindestens einem der vorhergehenden Ansprüche,
**dadurch gekennzeichnet,**
**dass** beim Umformen der beiden gebildeten Gurtabschnitte (14-1, 14-2; 15-1, 15-2; 16-1, 16-2) in diese mittels des Umformwerkzeuges (20) vorbestimmte Formen eingeformt werden.

8. Umformvorrichtung (30) zum Bilden eines Strukturbauteils eines Luft- oder Raumfahrzeuges, mit:
einem Werkzeugkörper (31), welcher eine Aufnahme (32) zum Aufnehmen eines geflochtenen, mindestens einen Gurt (4) umfassenden Vorformlings (1) aufweist;
mindestens eine **gekennzeichnet durch** Schneideeinrichtung zum Einbringen eines Trennschnittes (17) mindestens abschnittweise in den mindestens einen Gurt (4) des Vorformlings (1) zum Bilden zweier Gurtabschnitte (14-1, 14-2; 15-1, 15-2; 16-1, 16-2) des mindestens einen Gurtes (4); und
mindestens ein entlang des Trennschnittes (17) führbares Umformwerkzeug (20) zum Umformen der beiden gebildeten Gurtabschnitte (14-1, 14-2; 15-1, 15-2; 16-1, 16-2) des mindestens einen Gurtes (4) in eine vorbestimmte Form.

9. Umformvorrichtung (30) nach Anspruch 8,
**dadurch gekennzeichnet,**
**dass** die Umformvorrichtung (30) mindestens eine Entfernungseinrichtung zum Entfernen von Trennlagen (12, 13) von den beiden umgeformten Gurtabschnitten (14-1, 14-2; 15-1, 15-2; 16-1, 16-2) und eine Legeeinrichtung zum Legen von Gurtlagenabschnitten (18-1, 18-2; 19-1, 19-2) anstelle der Trennlagen (12, 13) auf die beiden umgeformten Gurtabschnitten (14-1, 14-2; 15-1, 15-2; 16-1, 16-2) aufweist.

10. Umformvorrichtung (30) nach Anspruch 8 oder 9,
**dadurch gekennzeichnet,**
**dass** das Umformwerkzeug (20) die Form eines Pflugs oder eines Schneeräumers mit seitlichen Umformflächen (26-1, 26-2) aufweist, welche in der Längsrichtung des Umformwerkzeugs (20) unter einem vorbestimmten Winkel aufeinander zulaufen, wobei sie an einer Frontseite des Umformwerkzeugs (20) in einer Schneide verbunden sind.

11. Umformvorrichtung (30) nach Anspruch 10,
**dadurch gekennzeichnet,**
**dass** die Umformflächen (26-1, 26-2) des Umformwerkzeugs (20) jeweils einen Steg (22) mit mindestens einer Kehle (23-1, 23-2) aufweisen, wobei die mindestens eine Kehle (23-1, 23-2) an ihrem oberen Ende in eine Führungsfläche (24-1, 24-2) übergeht.

12. Umformvorrichtung (30) nach Anspruch 10 oder 11,
**dadurch gekennzeichnet,**
**dass** die Umformflächen (26-1, 26-2) des Umformwerkzeugs (20) zum Bilden einer vorbestimmten Umformung der umzuformenden Abschnitte des Vorformlings (1) entsprechend ausgestaltet sind.

13. Umformvorrichtung (30) nach mindestens einem der Ansprüche 8 bis 12,
**dadurch gekennzeichnet,**
**dass** das Umformwerkzeug (20) die Schneideeinrichtung mitumfasst.

14. Umformvorrichtung (30) nach mindestens einem der Ansprüche 8 bis 12,
**dadurch gekennzeichnet,**
**dass** der Werkzeugkörper (31) als Formwerkzeug zum Tränken und Aushärten eines umgeformten Vorformlings (35) ausgebildet ist.

15. Strukturbauteil eines Luft- oder Raumfahrzeugs, welches mittels eines Verfahrens nach mindestens einem der Ansprüche 1 bis 7 und/oder mittels einer Umformvorrichtung (30) nach mindestens einem der Ansprüche 8 bis 14 hergestellt ist.

## Claims

1. Method for forming a structural component of an aircraft or spacecraft having the following method steps:
forming a preform (1) comprising at least one band (4) by braiding around a core (2); **characterised by** introducing a severing cut (17) at least in portions into the at least one band (4) of the preform (1) to form two band portions (14-1, 14-2; 15-1, 15-2; 16-1, 16-2) of the at least one band (4); and
deforming the two formed band portions (14-1, 14-2; 15-1, 15-2; 16-1, 16-2) of the at least one band (4) into a predetermined shape by means of a deformation tool (20) which can be guided along the severing cut (17).

2. Method as claimed in claim 1, **characterised in that** the core (2) has at least two braided work layers (7, 8, 9) braided around it, wherein the at least one band (4) is provided with separating layers (12, 13) between every two braided work layers (7, 8, 9).

3. Method as claimed in claim 1 or 2, **characterised in that** the deformation of the two formed band portions (14-1, 14-2; 15-1, 15-2; 16-1, 16-2) is carried out layer-by-layer by folding over these band portions (14-1, 14-2; 15-1; 15-2; 16-1, 16-2).

4. Method as claimed in claim 3, **characterised in that** the respective separating layers (12, 13) are removed after each layer-by-layer folding over of the band portions (14-1, 14-2; 15-1; 15-2; 16-1, 16-2) and predetermined band layers (18-1, 18-2; 19-1, 19-2) are laid in their place and fixed.

5. Method as claimed in claim 3 or 4, **characterised in that** by folding over the band portions (14-1, 14-2; 15-1; 15-2; 16-1, 16-2) a deformed preform (35) is formed which is severed in the longitudinal direction at a predetermined position in order to obtain two mutually separated, deformed performs (35-1, 35-2).

6. Method as claimed in at least one of the preceding claims, **characterised in that** after deformation of the two formed band portions (14-1, 14-2; 15-1, 15-2; 16-1, 16-2) the preform (35) deformed in this manner is impregnated with a matrix and hardened.

7. Method as claimed in at least one of the preceding claims, **characterised in that** during deformation of the two formed band portions (14-1, 14-2; 15-1, 15-2; 16-1, 16-2) predetermined shapes are introduced into these band portions by the deformation tool (20).

8. Deformation device (30) to form a structural component of an aircraft or spacecraft, having:
a tool body (31) which has a receiver (32) to receive a braided preform (1) having at least one band (4);
**characterised by**
at least one cutting device to introduce a severing cut (17) at least in portions into the at least one band (4) of the preform (1) in order to form two band portions (14-1, 14-2; 15-1, 15-2; 16-1, 16-2) of the at least one band (4); and
at least one deformation tool (20) which can be guided along the severing cut (17) to deform the two formed band portions (14-1, 14-2; 15-1, 15-2; 16-1, 16-2) of the at least one band (4) into a predetermined shape.

9. Deformation device (30) as claimed in claim 8, **characterised in that** the deformation device (30) has at least one removal device for removing separating layers (12, 13) from the two deformed band portions (14-1, 14-2; 15-1, 15-2; 16-1, 16-2) and a laying device for laying band layer portions (18-1, 18-2; 19-1, 19-2) in place of the separating layers (12, 13) onto the two deformed band portions (14-1, 14-2; 15-1, 15-2; 16-1, 16-2).

10. Deformation device (30) as claimed in claim 8 or 9, **characterised in that** the deformation tool (20) is in the form of a plough or a snowplough with lateral deformation surfaces (26-1, 26-2) which taper towards each other in the longitudinal direction of the deformation tool (20) at a predetermined angle, wherein they are connected at a front face of the deformation tool (20) in a cutting edge.

11. Deformation device (30) as claimed in claim 10, **characterised in that** the deformation surfaces (26-1, 26-2) of the deformation tool (20) each have a web (22) with at least one channel (23-1, 23-2), wherein the at least one channel (23-1, 23-2) merges at its upper end into a guide surface (24-1, 24-2).

12. Deformation device (30) as claimed in claim 10 or 11, **characterised in that** the deformation surfaces (26-1, 26-2) of the deformation tool (20) are appropriately designed to effect a predetermined deformation of the portions of the preform (1) which are to be deformed.

13. Deformation device (30) as claimed in at least one of claims 8 to 12, **characterised in that** the deformation tool (20) also comprises the cutting device.

14. Deformation device (30) as claimed in at least one of claims 8 to 12, **characterised in that** the tool body (31) is formed as a shaping tool for impregnation and hardening of a deformed perform (35).

15. Structural component of an aircraft or spacecraft, which is produced by a method as claimed in at least one of claims 1 to 7 and/or by a deformation device (30) as claimed in at least one of claims 8 to 14.

## Revendications

1. Procédé de formation d'un élément structural d'un aéronef ou véhicule spatial, comportant les étapes de procédé suivantes :
la formation d'une ébauche (1) présentant au moins une courroie (4) par tressage d'un noyau (2) ;
**caractérisé par**
la réalisation d'une coupe centrale (17) au moins sur certaines parties dans au moins une courroie (4) de l'ébauche (1) pour former deux portions de courroie (14-1, 14-2 ; 15-1, 15-2 ; 16-1, 16-2) de l'au moins une courroie (4) ; et
le façonnage des deux portions de courroie formées (14-1, 14-2 ; 15-1, 15-2 ; 16-1, 16-2) de l'au moins une courroie (4) en une forme prédéfinie au moyen d'un outil de façonnage (20) dirigeable le long de la coupe centrale (17) .

2. Procédé selon la revendication 1, **caractérisé en ce que** le noyau (2) est tressé avec au moins deux couches de tresse (7, 8, 9), l'au moins une courroie (4) étant munie de sous-couches (12, 13) entre respectivement deux couches de tresse (7, 8, 9).

3. Procédé selon la revendication 1 ou 2, **caractérisé en ce que** le façonnage des deux portions de courroie formées (14-1, 14-2 ; 15-1, 15-2 ; 16-1, 16-2) est réalisé en rabattant par couches ces portions de courroie (14-1, 14-2 ; 15-1, 15-2 ; 16-1, 16-2).

4. Procédé selon la revendication 3, **caractérisé en ce que**, après chaque rabat par couches des portions de courroie (14-1, 14-2 ; 15-1, 15-2 ; 16-1, 16-2), les sous-couches respectives (12, 13) sont enlevées puis déposées et fixées sur l'emplacement des couches de courroie prédéfinies (18-1, 18-2 ; 19-1, 19-2).

5. Procédé selon la revendication 3 ou 4, **caractérisé en ce que**, suite au rabat des portions de courroie (14-1, 14-2 ; 15-1, 15-2 ; 16-1, 16-2), une ébauche façonnée (35) est formée et est séparée dans la direction longitudinale sur une position prédéfinie pour obtenir deux ébauches façonnées (35-1, 35-2) et séparées l'une de l'autre.

6. Procédé selon au moins une des revendications précédentes, **caractérisé en ce que**, suite au façonnage des deux portions de courroie formées (14-1, 14-2 ; 15-1, 15-2 ; 16-1, 16-2), l'ébauche ainsi façonnée (35) est imprégnée et durcie avec une matrice.

7. Procédé selon au moins une des revendications précédentes, **caractérisé en ce que**, suite au façonnage des deux portions de courroie formées (14-1, 14-2 ; 15-1, 15-2 ; 16-1, 16-2), des formes prédéfinies sont façonnées dans celles-ci au moyen de l'outil de façonnage (20).

8. Dispositif de façonnage (30) destiné à former un élément structural d'un aéronef ou véhicule spatial, comprenant :
- un corps d'outil (31) qui présente un logement (32) pour recevoir une ébauche tressée (1) comprenant au moins une courroie (4) ;
**caractérisé par**
au moins un système de coupe pour réaliser une coupe centrale (17) au moins sur certaines parties dans l'au moins une courroie (4) de l'ébauche (1) afin de former deux portions de courroie (14-1, 14-2 ; 15-1, 15-2 ; 16-1, 16-2) de l'un moins une courroie (4) ; et
au moins un outil de façonnage (20) dirigeable le long de la coupe centrale (17) pour façonner les deux portions de courroie (14-1, 14-2 ; 15-1, 15-2 ; 16-1, 16-2) de l'au moins une courroie (4) dans une forme prédéfinie.

9. Dispositif de façonnage (30) selon la revendication 8, **caractérisé en ce que** le dispositif de façonnage (30) présente au moins un système d'enlèvement destiné à enlever des sous-couches (12, 13) des deux portions de courroie façonnées (14-1, 14-2 ; 15-1, 15-2 ; 16-1, 16-2) et un système de pose destiné à poser des portions de couches de courroie (18-1, 18-2 ; 19-1, 19-2) à la place des sous-couches (12, 13) sur les deux portions de courroie façonnées (14-1, 14-2 ; 15-1, 15-2 ; 16-1, 16-2).

10. Dispositif de façonnage (30) selon la revendication 8 ou 9, **caractérisé en ce que** l'outil de façonnage (20) a la forme d'une charrue ou d'un chasse-neige avec des surfaces de façonnage latérales (26-1, 26-2) qui avancent l'une sur l'autre dans la direction longitudinale de l'outil de façonnage (20) à un angle prédéfini et sont reliées dans une lame sur une face frontale de l'outil de façonnage (20).

11. Dispositif de façonnage (30) selon la revendication 10, **caractérisé en ce que** les surfaces de façonnage (26-1, 26-2) de l'outil de façonnage (20) présentent chacune une traverse (22) comportant au moins un congé (23-1, 23-2), l'au moins un congé (23-1, 23-2) passant sur son extrémité supérieure dans une surface de guidage (24-1, 24-2).

12. Dispositif de façonnage (30) selon la revendication 10 ou 11, **caractérisé en ce que** les surfaces de façonnage (26-1, 26-2) de l'outil de façonnage (20) sont réalisées de manière correspondante pour former un façonnage prédéfini des portions de l'ébauche (1) à façonner.

13. Dispositif de façonnage (30) selon au moins une des revendications 8 à 12, **caractérisé en ce que** l'outil de façonnage (20) comprend le système de coupe.

14. Dispositif de façonnage (30) selon au moins une des revendications 8 à 12, **caractérisé en ce que** le corps d'outil (31) est réalisé sous la forme d'un outil de formage pour imprégner et durcir une ébauche façonnée (35).

15. Élément structural d'un aéronef ou véhicule spatial, fabriqué au moyen d'un procédé selon au moins une des revendications 1 à 7 et/ou au moyen d'un dispositif de façonnage (30) selon au moins une des revendications 8 à 14.
